# EUROPÄISCHE PATENTSCHRIFT

(11) **EP 3 180 180 B1**
(45) Veröffentlichungstag und Bekanntmachung des Hinweises auf die Patenterteilung: **29.01.2020**
(21) Anmeldenummer: 15742218.9
(22) Anmeldetag: 22.07.2015
(51) Int. Cl.: B29C 65/08, B29C 65/78, B29C 65/56, B29C 65/58, B29C 65/72, B29K 101/12

(54) **VERFAHREN ZUM HERSTELLEN EINER BAUTEILVERBINDUNG**
METHOD FOR PRODUCING A COMPONENT CONNECTION
PROCÉDÉ D'ÉTABLISSEMENT D'UNE LIAISON ENTRE DES ÉLÉMENTS STRUCTURAUX

(30) Priorität: 13.08.2014 DE 102014216006
(43) Veröffentlichungstag der Anmeldung: 21.06.2017
(73) Patentinhaber: Bayerische Motoren Werke Aktiengesellschaft, 80809 München (DE)
(72) Erfinder: HAMMER, Maik, 84079 Bruckberg (DE); NIEKERK, Johann, 80993 München (DE); STEFANZIOSA, Clemens, 80539 München (DE)
(86) Internationale Anmeldenummer: PCT/EP2015/066759
(87) Internationale Veröffentlichungsnummer: WO 2016/023721

(56) Entgegenhaltungen:
- EP-A1- 2 698 549
- US-A- 3 347 730
- US-A- 4 865 680
- US-A- 4 865 687

## Beschreibung

Die vorliegende Erfindung betrifft ein Verfahren zum Herstellen einer Bauteilverbindung gemäß dem Oberbegriff des Patentanspruches 1.

Eine derartige Bauteilverbindung ist aus der US 3 347 730 A bekannt. Zum technischen Hintergrund der Erfindung zählen die US 4 865 680 A1, US 4 865 687 A sowie die EP 2 698 549 A1.

Aus dem Stand der Technik sind eine Vielzahl von Bauteilverbindungen bekannt, bei denen Kugeln als Verbindungselemente eingesetzt werden. Beispielsweise ist aus der DE 10 2009 049 602 B3 eine "Bauteilverbindung" bekannt, bei der auf ein Karosserieblech eine als Verbindungselement dienende Kugel aufgeschweißt ist, die formschlüssig in eine in einem anderen Blech vorgesehene Ausnehmung eingreift.

Aus der DE 10 2012 214 453 B4 ist eine Bauteilverbindung bekannt, bei der auf ein Blech eine "Doppelkugel", d.h. ein durch zwei miteinander verbundene Kugeln gebildetes Verbindungselement, aufgeschweißt ist, wobei auf die Doppelkugel ein Clip-Element aufgeclipst werden kann.

Aufgabe der Erfindung ist es, ein Verfahren zum Herstellen einer Bauteilverbindung, welche eine Doppelkugel oder eine Mehrfachkugel aufweist, anzugeben, das weitere Anwendungsbereiche erschließt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt des erfindungsgemäßen Verfahrens zum Herstellen einer Bauteilverbindung ist ein Substrat, das im Folgenden als "erstes Bauteil" bezeichnet wird. Das erste Bauteil kann z.B. eben sein oder eine nahezu beliebige andere Form aufweisen.

Das erste Bauteil ist zumindest im Bereich eines Teils seiner Oberfläche aus thermoplastischem Kunststoff hergestellt oder zumindest im Bereich eines Teils seiner Oberfläche mit thermoplastischem Kunststoff versehen. Selbstverständlich kann das ganze erste Bauteil vollständig aus thermoplastischem Kunststoff hergestellt sein. Alternativ dazu kann das erste Bauteil ganz oder teilweise aus einem faserverstärkten thermoplastischen Kunststoffmaterial hergestellt sein. Die Fasern sind dann im Inneren des thermoplastischen Kunststoffs des ersten Bauteils verteilt und dienen der Verstärkung bzw. Versteifung. Als Versteifungsfasern kommen z.B. Kohlefasern, Glasfasern, Aramidfasern o.ä. in Betracht. Hinsichtlich ihrer Faserlänge können Langfasern, Kurzfasern oder sog. Endlosfasern oder Kombinationen derselben Verwendung finden.

Wie bereits angedeutet, muss nicht das gesamte erste Bauteil vollständig aus thermoplastischem Kunststoff bestehen. Denkbar ist auch, dass das erste Bauteil ein Trägersubstrat aufweist, das ganz oder zumindest in einem Teilbereich seiner Oberfläche mit einem thermoplastischem Kunststoff oder einem faserverstärkten thermoplastischem Kunststoff beschichtet ist.

Gemäß der Erfindung wird mit dem ersten Bauteil eine erste Kugel verbunden und zwar durch Ultraschall-Schweißen. Hierzu wird eine bereitgestellte erste Kugel mittels einer Sonotrode gegen eine "Verbindungsstelle" des ersten Bauteils gedrückt.

Bei der ersten Kugel kann es sich um eine Kugel handeln, die vollständig aus thermoplastischem Kunststoffmaterial besteht. Alternativ dazu kann es sich auch um eine aus einem thermoplastischen Kunststoffmaterial bestehende Hohlkugel handeln. Ferner ist denkbar, dass die erste Kugel einen Kugelkern aufweist, der z.B. aus Stahl, Aluminium, Glas, Blei o.ä. bestehen kann und der ganz oder teilweise mit einem thermoplastischen Kunststoffmaterial oder einem faserverstärkten thermoplastischen Kunststoffmaterial beschichtet bzw. überzogen ist. Auf diese Weise können bestimmte Eigenschaften des Kugelkerns, der z.B. magnetisch sein kann, mit den spezifischen Eigenschaften des als "Beschichtung" verwendeten thermoplastischen Kunststoffmaterials (z.B. Schweißbarkeit mit Bauteilen oder Substraten) kombiniert werden.

Wenn zumindest die Oberfläche oder ein Teil der Oberfläche der ersten Kugel aus einem faser- oder partikelverstärkten Kunststoffmaterial besteht, kann dadurch die Festigkeit der ersten Kugel erhöht werden.

Mittels der Sonotrode wird die an das erste Bauteil angedrückte erste Kugel in Schwingungen versetzt, was dazu führt, dass Material der ersten Kugel und/oder Material des ersten Bauteils lokal, d.h. rund um die Berührstelle, aufschmilzt und die erste Kugel mit dem ersten Bauteil lokal verschweißt.

Gemäß der Erfindung wird auf die erste Kugel eine zweite Kugel aufgeschweißt. Hierzu wird zunächst die zweite Kugel mittels derselben Sonotrode oder einer anderen Sonotrode gegen die erste Kugel gedrückt und in Schwingungen versetzt, was dazu führt, dass Material der zweiten Kugel und/oder das Material der ersten Kugel im Berührbereich, d.h. rund um die Berührstelle, aufschmilzt und die zweite Kugel mit der ersten Kugel verschweißt.

Gemäß der Erfindung können selbstverständlich nicht nur Doppelkugeln hergestellt werden, sondern ganz allgemein Mehrfachkugeln, d.h. Verbindungselemente, die zwei oder mehr als zwei sequenziell nacheinander miteinander verschweißte Kugeln aufweisen.

Die einzelnen miteinander zu verschweißenden Kugeln können hinsichtlich ihres Aufbaus identisch oder unterschiedlich sein. Beispielsweise kann die zweite Kugel eine aus thermoplastischem Kunststoffmaterial hergestellte Vollkugel oder eine aus thermoplastischem Kunststoffmaterial hergestellte Hohlkugel sein. Alternativ dazu kann die zweite Kugel einen Kugelkern aufweisen, der z.B. aus Stahl, Aluminium, Glas, Blei o.ä. besteht und der ganz oder teilweise mit einem thermoplastischen Kunststoff oder einem faserverstärkten thermoplastischen Kunststoff beschichtet bzw. überzogen ist. Wie oben bereits im Zusammenhang mit der ersten Kugel erläutert, können dadurch spezifische Eigenschaften des Kugelkerns mit spezifischen Eigenschaften der Beschichtung kombiniert werden.

Um das Andrücken und Positionieren der zweiten Kugel an die erste Kugel bzw. in Bezug auf die erste Kugel zu erleichtern, kann eine Positionierhilfe verwendet werden. Unter dem Begriff "Positionierhilfe" ist ganz allgemein eine die erste Kugel teilweise oder ganz umgreifende Einrichtung zu verstehen, welche als Führung zum exakten Heranführen der Sonotrode bzw. der dadurch anzudrückenden zweiten Kugel an die erste Kugel dient. Anders ausgedrückt wird also zunächst die Positionierhilfe an die erste Kugel angesetzt, wobei die Positionierhilfe die erste Kugel zumindest teilweise umgreift. Anschließend wird die Sonotrode beim Andrücken der zweiten Kugel an die erste Kugel mittels der Positionierhilfe geführt bzw. positioniert.

Dieselbe oder eine ähnliche Positionierhilfe kann auch bereits beim Andrücken bzw. Verschweißen der ersten Kugel mit dem ersten Bauteil verwendet werden. Vor dem Andrücken der ersten Kugel an das erste Bauteil wird also zunächst eine Positionierhilfe an das erste Bauteil angesetzt bzw. angedrückt. Wenn sich die Positionierhilfe in einer definierten Position befindet, wird unter Zuhilfenahme die Sonotrode bzw. die erste Kugel mittels der Sonotrode an das erste Bauteil herangeführt und gegen das erste Bauteil gedrückt.

Um eine exakte Positionierung der ersten Kugel in Bezug auf das erste Bauteil zu erreichen, kann an oder in der Oberfläche des ersten Bauteils eine physische Markierung vorgesehen sein. Die physische Markierung kann bspw. als muldenartige Vertiefung, als Durchgangsloch o.ä. ausgebildet sein. Die erste Kugel ragt zumindest ein Stück weit in die physische Markierung hinein und wird dadurch eindeutig relativ zu dem ersten Bauteil positioniert.

Nach einer Weiterbildung der Erfindung ist vorgesehen, dass die erste bzw. die zweite Kugel während des Verschweißens mittels der Sonotrode in translatorische Schwingungen versetzt wird. Alternativ oder ergänzend dazu kann auch vorgesehen sein, dass die erste bzw. zweite Kugel während des Verschweißens mittels der Sonotrode in torsionale Schwingungen versetzt wird.

Ein wesentlicher sich aus der vollsymmetrischen Gestalt einer Kugel ergebender Vorteil ist, dass beim Verschweißen einer Kugel diese stets richtig im Raum ausgerichtet ist. Die zu verschweißende Kugel muss also lediglich richtig positioniert werden, nicht aber in bestimmter Weise ausgerichtet werden. Aufgrund der konvexen Geometrie einer Kugel ergibt sich bei Ansetzen an das erste Bauteil bzw. beim Ansetzen der zweiten Kugel an die erste Kugel eine Punktberührung oder eine im Wesentlichen punktförmige Berührung, was beim Verschweißen zu sehr hohen Energiedichten und somit zu einem sauberen lokal begrenzten Aufschmelzen des Kugelmaterials bzw. des Materials des ersten Bauteils führt. Im Ergebnis entsteht somit eine qualitativ sehr hochwertige Schweißverbindung.

Nach einer Weiterbildung der Erfindung wird die erste bzw. zweite Kugel mittels einer Ansaugeinrichtung an oder in eine muldenförmige Ausnehmung der Sonotrode angesaugt oder eingesaugt und im angesaugten oder eingesaugten Zustand mittels der Sonotrode an das erste Bauteil bzw. an die erste Kugel angedrückt.

Die muldenförmige Ausnehmung kann insbesondere kugelkalottenförmig gestaltet sein. Der Krümmungsradius der kugelkalottenförmigen Ausnehmung der Sonotrode kann gleich dem Radius der Kugel sein. Relativ dazu kann der Krümmungsradius der kugelkalottenförmigen Ausnehmung etwas kleiner als der Radius der Kugel sein, was dann zu einer ringartigen Berührung zwischen der kugelartigen Ausnehmung und der Kugel führt. Wenn der Krümmungsradius der kugelkalottenförmigen Ausnehmung etwas größer als der Radius der Kugel ist, liegt die Kugel nur im Bereich einer relativ kleinen Berührfläche an der kugelkalottenartigen Ausnehmung an.

Es kann vorgesehen sein, dass die erste bzw. zweite Kugel durch Ansaugen mittels der Ansaugeinrichtung aus einem Kugelreservoir, insbesondere aus einem mit einer Vielzahl von Kugeln befüllten Vorratsbehälter entnommen, an die Sonotrode angesaugt und mittels der Sonotrode an das erste Bauteil bzw. an die erste Kugel herangeführt und angedrückt wird.

Alternativ dazu kann auch vorgesehen sein, dass die Kugel der Sonotrode bzw. der Ausnehmung der Sonotrode mittels einer Zuführeinrichtung (z.B. pneumatisch über einen Zuführschlauch o.ä.) zugeführt wird, z.B. von der Seite her.

Nach einer Weiterbildung der Erfindung wird auf die erste und/oder die zweite Kugel ein Clip-Element aufgeclipst. Das Clip-Element kann integraler Bestandteil eines zweiten Bauteils sein.

Für eine derartige Bauteilverbindung gibt es nahezu unbegrenzte Anwendungsmöglichkeiten. Die Erfindung ist insbesondere für den Fahrzeugkarosseriebau geeignet, d.h. bei dem ersten und/oder dem zweiten Bauteil kann es sich bspw. um ein Fahrzeugkarosseriebauteil handeln. Alternativ dazu kann es sich bei dem ersten oder dem zweiten Bauteil um ein Fahrzeugkarosseriebauteil und bei dem anderen Bauteil um ein Anbauteil handeln. Derartige Anbauteile sind z.B. im Motorraumbereich von Fahrzeugen in großer Vielzahl zu finden, aber auch in anderen Fahrzeugbereichen, wie z.B. im Kofferraumbereich, im Unterbodenbereich o.ä.

Mittels eines derartigen Clip-Elements kann auch ein zweites, ein lochaufweisendes Bauteil mit dem ersten Bauteil formschlüssig und/oder kraftschlüssig verbunden werden. Das zweite, mit einem Durchgangsloch versehene Bauteil kann so an das erste Bauteil angelegt werden, dass die durch die beiden Kugeln gebildete "Doppelkugel" durch das in dem zweiten Bauteil vorgesehene Loch hindurch ragt. Zum Fixieren der beiden Bauteile braucht dann lediglich ein Clip-Element auf die "Doppelkugel", welche dann als Verbindungselement für die beiden Bauteile fungiert, aufgeclipst werden.

Das Verschweißen der Kugeln kann von Hand, d.h. mittels einer von Hand zu führenden und zu betätigenden Sonotrode oder vollautomatisiert erfolgen. Bei einem automatisierten Prozess wird die Sonotrode z.B. mittels eines Industrieroboters geführt.

Im Folgenden wird die Erfindung im Zusammenhang mit der Zeichnung näher erläutert. Es zeigen:

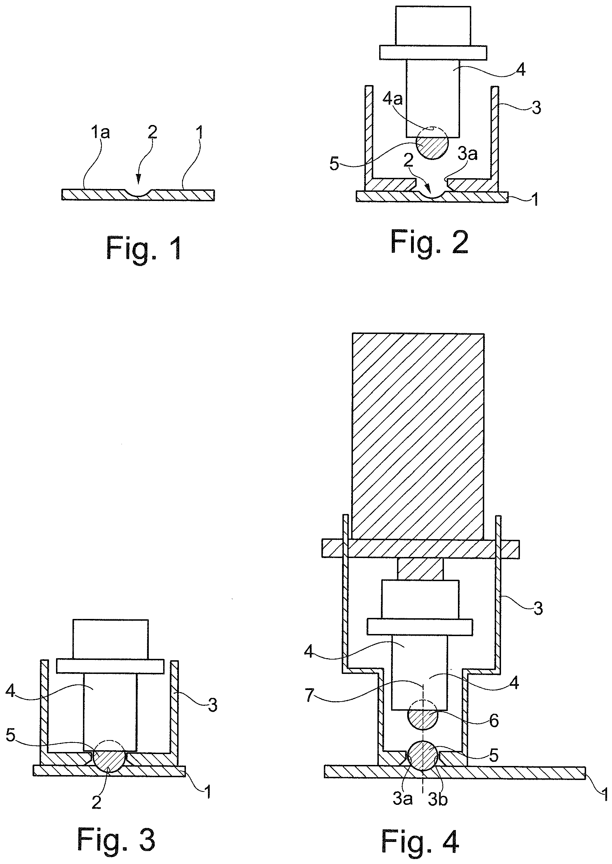

- Fig. 1-7: einzelne Schritte der Durchführung des erfindungsgemäßen Verfahrens.

Fig. 1 zeigt ein erstes, im Wesentlichen ebenes Kunststoffbauteil 1, in dessen Oberseite 1a eine muldenartige Vertiefung vorgesehen ist, die als "physische" Markierung zur Positionierung einer Kugel dient. Das erste Bauteil 1 kann vollständig aus einem thermoplastischen Kunststoffmaterial bestehen oder mit einem thermoplastischen Kunststoffmaterial überzogen werden.

Bei dem in Fig. 2 gezeigten Verfahrensschritt wird eine Positionierungshilfe 3 an das erste Bauteil 1 angesetzt. Die Positionierungshilfe 3 weist eine kreisförmige Ausnehmung 3a auf, die konzentrisch bzgl. der muldenartigen Vertiefung 2 ausgerichtet ist.

Mittels einer hier nur sehr schematisch dargestellten Sonotrode 4, welche an seiner unteren Stirnseite eine muldenartige Vertiefung 4a aufweist, wird eine erste Kugel 5 angesaugt. Das Ansaugen der Kugel 5 an bzw. in die muldenartige Vertiefung 4a der Sonotrode 4 erfolgt mittels einer hier nicht näher dargestellten, in die Sonotrode 4 integrierten oder an der Sonotrode 4 angeordneten Ansaugeinrichtung.

Die an die Sonotrode 4 angesaugte erste Kugel 5 wird durch translatorisches Verschieben der Sonotrode 4 an das erste Bauteil 1 herangefahren, bis die erste Kugel 5 exakt in der muldenartigen Vertiefung 2 des ersten Bauteils 1 zu liegen kommt, was in Fig. 3 dargestellt ist. Die Positionierhilfe 3 dient dabei der Führung der Sonotrode, wodurch sichergestellt wird, dass die erste Kugel 5 exakt zentrisch in Bezug auf die muldenartige Vertiefung 2 positioniert wird.

Anschließend wird die Sonotrode 4 "eingeschaltet". Die Sonotrode 4 übt dabei "Ultraschall-Schwingungen" auf die erste Kugel 5 aus. Die Ultraschall-Schwingungen können translatorische Schwingungen und/oder torsionale Schwingungen sein. Durch die Ultraschall-Schwingungen entsteht im Berührbereich zwischen der ersten Kugel 5 und dem ersten Bauteil 1 bzw. der muldenartigen Vertiefung 2 eine derart hohe Energiedichte, dass Material der ersten Kugel 5 und/oder Material des ersten Bauteils 1 lokal aufschmilzt, was zum lokalen Verschmelzen bzw. Verschweißen der ersten Kugel 5 mit dem ersten Bauteil 1 führt.

Wie aus Fig. 3 ersichtlich ist, entspricht der Außendurchmesser der ersten Kugel 5 im Wesentlichen dem Durchmesser 3a der Positionierhilfe 3, wodurch sichergestellt ist, dass die erste Kugel 5 auch bei eingeschalteter Sonotrode 4 exakt in ihrer durch die Ausnehmung 3a vorgegebenen Position bleibt.

Fig. 4 zeigt den Verfahrensschritt des Aufschweißens einer zweiten Kugel 6 auf die erste Kugel 5. Zunächst wird auch hier eine Positionierhilfe oder dieselbe Positionierhilfe 3 an das erste Bauteil 1 angesetzt. Die Positionierhilfe 3 weist an der Unterseite ihrer kreisförmigen Ausnehmung 3a eine Abschrägung 3b auf, die ein "Aufsetzen" der Positionierhilfe 3 auf die erste Kugel 5 erleichtert. Aufgrund der Abschrägung 3b kann die Positionierhilfe auf der ersten Kugel nach unten gleiten. Da der Durchmesser der Ausnehmung 3a dem Durchmesser der ersten Kugel 5 entspricht, ist die Positionierhilfe, wie bereits erwähnt, exakt in Bezug auf die erste Kugel 5 positioniert.

Anschließend wird die zweite Kugel 6 an die Sonotrode 4 angesaugt. Die Sonotrode 4 wird mittels der Positionierhilfe 3 an die erste Kugel 5 herangeführt, derart, dass die Mittelpunkte der beiden Kugeln 5, 6 exakt auf einer Senkrechten 7 in Bezug auf das erste Bauteil 1 liegen.

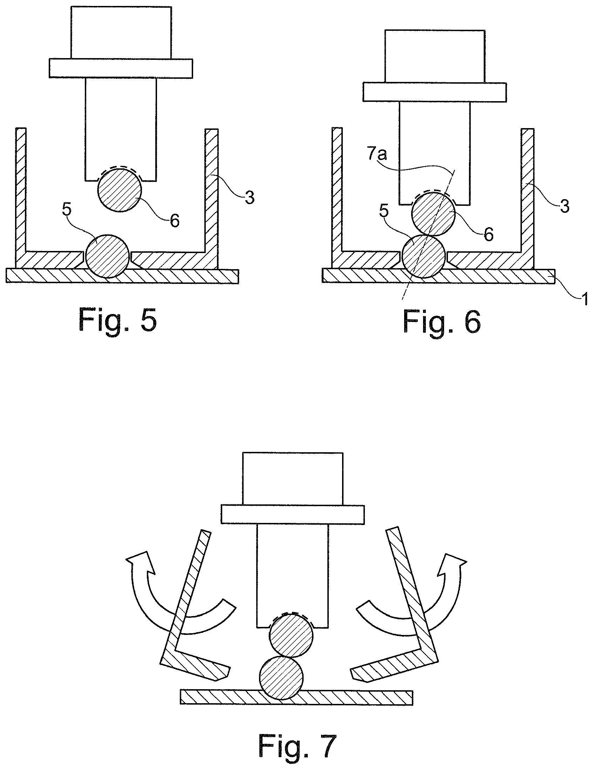

Wie in den Fig. 5-7 dargestellt ist, muss die zweite Kugel 6 nicht unbedingt so gesetzt bzw. mit der ersten Kugel 5 verschweißt werden, dass eine durch die Mittelpunkte der beiden Kugeln 5, 6 verlaufende Gerade 7a senkrecht zu dem ersten Bauteil 1 verläuft. Wie insbesondere aus den Fig. 5, 6, 7 ersichtlich ist, kann die zweite Kugel 6 auch "schräg" an die erste Kugel 5 angeschweißt werden. In diesem Fall verläuft die durch die Mittelpunkte der beiden Kugeln 5, 6 verlaufende Gerade 7a schräg zu einer Senkrechten des Bauteils 1 und somit auch schräg zu dem hier ebenen Bauteil 1.

Die in den Fig. gezeigte Positionierhilfe 3 ist als "voreilende" Positionierhilfe ausgebildet, d.h. sie kommt zur Anlage an dem ersten Bauteil 1, bevor die erste Kugel 5 an das erste Bauteil 1 herangeführt wird bzw. bevor die zweite Kugel 6 an die erste Kugel 5 herangeführt wird. Insbesondere beim Schweißen von Mehrfachkugeln gewährleistet eine derartige Positionierhilfe eine exakte Lage der Kugeln relativ zueinander. Wie bereits erwähnt, fungiert die Positionierhilfe 3 zudem als "lokaler Niederhalter" und verhindert somit das Verrutschen der aktuell zu schweißenden Kugel während des Schweißvorgangs.

Wie in Fig. 7 dargestellt, kann die Positionierhilfe zweiteilig ausgebildet sein, d.h. sie kann durch zwei auseinanderschwenkbare Hälften gebildet sein oder zwei auseinanderschwenkbare Hälften aufweisen, was nach dem Schweißvorgang das Entfernen der Positionierhilfe erleichtert.

Ferner kann vorgesehen sein, dass die Auslösung des Schweißvorgangs, d.h. das Einschalten der Sonotrode 4 erst bei Erreichen oder Überschreiten einer vorgegebenen, auf die erste Kugel 5 bzw. die zweite Kugel 6 wirkenden Andrückkraft erfolgt. Ferner kann vorgesehen sein, dass bei einem Nachdrücken bzw. einem erneuten Andrücken der Sonotrode keine erneute Auslösung des Schweißvorgangs, d.h. kein erneutes Einschreiten der Sonotrode erfolgt.

## Patentansprüche

1. Verfahren zum Herstellen einer Bauteilverbindung, **gekennzeichnet durch** folgende Schritte:
- Bereitstellen eines ersten Bauteils (1),
- Bereitstellen einer ersten Kugel (5),
- Andrücken der ersten Kugel (5) gegen das erste Bauteil (1) mittels einer Sonotrode (4),
- in Schwingungen Versetzen der ersten Kugel (5) mittels der Sonotrode (4), derart, dass Material der ersten Kugel (5) und/oder Material des ersten Bauteils (1) aufschmilzt und die erste Kugel (5) mit dem ersten Bauteil (1) verschweißt,
- Bereitstellen einer zweiten Kugel (6),
- Andrücken der zweiten Kugel (6) gegen die erste Kugel (5) mittels derselben Sonotrode (4) oder einer anderen Sonotrode,
- in Schwingungen Versetzen der zweiten Kugel (6) mittels derselben Sonotrode (4) oder der anderen Sonotrode, derart, dass Material der zweiten Kugel (6) und/oder Material der ersten Kugel (5) aufschmilzt und die zweite Kugel (6) mit der ersten Kugel (5) verschweißt, **dadurch gekennzeichnet, dass** durch das in Schwingung Versetzen der zweiten Kugel eine durch die beiden miteinander verbundenen Kugeln (5, 6) gebildete Doppelkugel entsteht.

2. Verfahren nach Anspruch 1, **dadurch gekennzeichnet, dass** eine die erste Kugel (5) zumindest teilweise umgreifende Positionierhilfe (3) an die erste Kugel (5) angesetzt wird, wobei die Sonotrode (4) beim Andrücken der zweiten Kugel (6) an die erste Kugel (5) unter Zuhilfenahme der Positionierhilfe (3) geführt und positioniert wird.

3. Verfahren nach Anspruch 1 oder 2, **dadurch gekennzeichnet, dass** vor dem Andrücken der ersten Kugel (5) an das erste Bauteil (1) zunächst eine Positionierhilfe (3) an das erste Bauteil angesetzt wird, wobei die Sonotrode beim Andrücken der ersten Kugel (5) an das erste Bauteil (1) unter Zuhilfenahme der Positionierhilfe (3) geführt und positioniert wird.

4. Verfahren nach einem der Ansprüche 1 bis 3, **dadurch gekennzeichnet, dass** in der Oberfläche des ersten Bauteils (1) eine physische Markierung (2), insbesondere eine muldenartige Vertiefung vorgesehen ist oder erzeugt wird, in welche die erste Kugel (5) hinein ragt, wobei die erste Kugel (5) durch die Markierung eindeutig relativ zu dem ersten Bauteil (1) positioniert ist.

5. Verfahren nach einem der Ansprüche 1 bis 4, **dadurch gekennzeichnet, dass** die erste Kugel (5) und/oder die zweite Kugel (6)
- eine Vollkugel aus thermoplastischem Kunststoff ist oder
- eine Hohlkugel aus thermoplastischem Kunststoff ist oder
- einen Kugelkern aufweist, der mit einem thermoplastischen Kunststoff beschichtet ist, wobei sich das Material des Kugelkerns von dem Material des thermoplastischen Kunststoffs unterscheidet.

6. Verfahren nach einem der Ansprüche 1 bis 5, **dadurch gekennzeichnet, dass** zumindest eine oberflächennahe Schicht der ersten Kugel (5) und/oder der zweiten Kugel (6) durch Fasern und/oder Partikel verstärkt ist.

7. Verfahren nach einem der Ansprüche 1 bis 6, **dadurch gekennzeichnet, dass** die Sonotrode (4) eine muldenförmige, insbesondere eine kugelkalottenförmige Aufnahme (4a) aufweist, wobei die erste Kugel (5) bzw. die zweite Kugel (6) beim Andrücken in die muldenförmige Aufnahme (4a) ragt.

8. Verfahren nach einem der Ansprüche 1 bis 7, **dadurch gekennzeichnet, dass** die erste bzw. zweite Kugel (5, 6) mittels der Sonotrode (4) in translatorische Schwingungen versetzt wird.

9. Verfahren nach einem der Ansprüche 1 bis 8, **dadurch gekennzeichnet, dass** die erste bzw. zweite Kugel (5, 6) mittels der Sonotrode (4) in torsionale Schwingungen versetzt wird.

10. Verfahren nach einem der Ansprüche 1 bis 9, **dadurch gekennzeichnet, dass** das erste Bauteil (1) an der Stelle, an der die erste Kugel (5) gegen das erste Bauteil (1) gedrückt wird, im Wesentlichen oder exakt eben ist, so dass vor dem Verschweißen zwischen der ersten Kugel (5) und der Stelle, an der die erste Kugel (5) gegen das erste Bauteil (1) gedrückt wird, eine punktförmige Berührung besteht.

11. Verfahren nach einem der Ansprüche 1 bis 10, **dadurch gekennzeichnet, dass** die erste bzw. zweite Kugel (5, 6) mittels einer Ansaugeinrichtung an oder in die muldenförmige Ausnehmung (4a) angesaugt oder eingesaugt wird und im angesaugten oder eingesaugten Zustand mittels der Sonotrode (4) an das erste Bauteil (1) bzw. an die erste Kugel (5) angedrückt wird.

12. Verfahren nach Anspruch 11, **dadurch gekennzeichnet, dass** die erste bzw. zweite Kugel (5, 6) durch das Ansaugen aus einem Kugelreservoir, insbesondere aus einem mit einer Vielzahl von Kugeln befüllten Vorratsbehälter, entnommen wird.

13. Verfahren nach einem der Ansprüche 1 bis 12, **dadurch gekennzeichnet, dass** auf die erste und/oder die zweite Kugel (5, 6) ein Clip-Element aufgeclipst wird.

14. Verfahren nach einem der Ansprüche 1 bis 13, **dadurch gekennzeichnet, dass** ein zweites Bauteil, welches ein Durchgangsloch aufweist, so an das erste Bauteil (1) herangeführt wird, dass die erste und/oder die zweite Kugel (5, 6) in das Durchgangsloch hinein oder durch das Durchgangsloch hindurch ragt und anschließend ein Clip-Element auf die erste und/oder die zweite Kugel (5, 6) aufgeclipst wird, wobei die beiden Bauteile durch das Clip-Element zusammengehalten werden.

## Claims

1. A method for producing a component connection, **characterised by** the following steps:
- providing a first component (1),
- providing a first sphere (5),
- pressing the first sphere (5) against the first component (1) by means of a sonotrode (4),
- causing the first sphere (5) to vibrate by means of the sonotrode (4), such that material of the first sphere (5) and/or material of the first component (1) melts and welds the first sphere (5) to the first component (1),
- providing a second sphere (6),
- pressing the second sphere (6) against the first sphere (5) by means of the same sonotrode (4) or another sonotrode,
- causing the second sphere (6) to vibrate by means of the same sonotrode (4) or the other sonotrode, such that material of the second sphere (6) and/or material of the first sphere (5) melts and welds the second sphere (6) to the first sphere (5), **characterised in that** the causing of the second sphere to vibrate produces a double sphere formed by the two spheres (5, 6) connected together.

2. A method according to Claim 1, **characterised in that** a positioning aid (3) which at least in part encompasses the first sphere (5) is placed on the first sphere (5), the sonotrode (4) upon the second sphere (6) being pressed against the first sphere (5) being guided and positioned with the aid of the positioning aid (3).

3. A method according to Claim 1 or Claim 2, **characterised in that** prior to pressing the first sphere (5) against the first component (1) first of all a positioning aid (3) is placed on the first component, the sonotrode upon the first sphere (5) being pressed against the first component (1) being guided and positioned with the aid of the positioning aid (3).

4. A method according to one of Claims 1 to 3, **characterised in that** a physical marking (2), especially an indentation-like depression, is provided or is produced in the surface of the first component (1), into which marking the first sphere (5) protrudes, the first sphere (5) being clearly positioned relative to the first component (1) by the marking.

5. A method according to one of Claims 1 to 4, **characterised in that** the first sphere (5) and/or the second sphere (6)
- is a solid sphere made of thermoplastic material, or
- is a hollow sphere made of thermoplastic material, or
- has a sphere core which is coated with a thermoplastic material, the material of the sphere core differing from the material of the thermoplastic material.

6. A method according to one of Claims 1 to 5, **characterised in that** at least one layer, close to the surface, of the first sphere (5) and/or of the second sphere (6) is reinforced by fibres and/or particles.

7. A method according to one of Claims 1 to 6, **characterised in that** the sonotrode (4) has an indentation-shaped, especially a spherical-cap-shaped, receptacle (4a), the first sphere (5) or the second sphere (6) upon being pressed on protruding into the indentation-shaped receptacle (4a).

8. A method according to one of Claims 1 to 7, **characterised in that** the first or second sphere (5, 6) is caused to vibrate in translatory manner by means of the sonotrode (4).

9. A method according to one of Claims 1 to 8, **characterised in that** the first or second sphere (5, 6) is caused to vibrate in torsional manner by means of the sonotrode (4).

10. A method according to one of Claims 1 to 9, **characterised in that** the first component (1) at the point at which the first sphere (5) is pressed against the first component (1) is substantially or exactly flat, so that punctiform contact exists prior to the welding between the first sphere (5) and the point at which the first sphere (5) is pressed against the first component (1).

11. A method according to one of Claims 1 to 10, **characterised in that** the first or second sphere (5, 6) is drawn by suction onto or into the indentation-shaped cutout (4a) by means of a suction means and in the drawn-on or drawn-in state is pressed by means of the sonotrode (4) against the first component (1) or against the first sphere (5).

12. A method according to Claim 11, **characterised in that** the first or second sphere (5, 6) is removed from a sphere reservoir, especially from a storage container filled with a large number of spheres, by the suction.

13. A method according to one of Claims 1 to 12, **characterised in that** a clip element is clipped onto the first and/or the second sphere (5, 6).

14. A method according to one of Claims 1 to 13, **characterised in that** a second component which has a through-hole is brought up to the first component (1) such that the first and/or the second sphere (5, 6) protrudes into the through-hole or through the through-hole and then a clip element is clipped onto the first and/or the second sphere (5, 6), with the two components being held together by the clip element.

## Revendications

1. Procédé d'obtention d'un assemblage de pièces,
**caractérisé en ce qu'**il comporte les étapes suivantes consistant à :
- se procurer une première pièce (1),
- se procurer une première sphère (5),
- appuyer la première sphère (5) contre la première pièce (1) au moyen d'une sonotrode (4),
- faire vibrer la première sphère (5) au moyen de la sonotrode (4) de sorte que du matériau de la première sphère (5) et/ou du matériau de la première pièce (1) fonde et que la première sphère (5) se soude à la première pièce (1),
- se procurer une seconde sphère (6),
- appuyer la seconde sphère (6) contre la première sphère (5) au moyen de la même sonotrode (4) ou d'une autre sonotrode,
- faire vibrer la seconde sphère (6) au moyen de la même sonotrode (4) ou de l'autre sonotrode de sorte que du matériau de la seconde sphère (6) et/ou du matériau de la première sphère (5) fonde et que la seconde sphère (6) se soude à la première sphère (5),
**caractérisé en ce que**
du fait la mise en vibrations de la seconde sphère, une double sphère formée par les deux sphères (5, 6) assemblées l'une à l'autre est obtenue.

2. Procédé conforme à la revendication 1,
**caractérisé en ce qu'**
un auxiliaire de positionnement (3) venant en prise au moins partiellement autour de la première sphère (5) est appliqué sur cette première sphère (5), et lors de l'appui de la seconde sphère (6) contre la première sphère (5) la sonotrode (4) est guidée et positionnée à l'aide de l'auxiliaire de positionnement (3).

3. Procédé conforme à la revendication 1 ou 2,
**caractérisé en ce qu'**
avant d'appuyer la première sphère (5) contre la première pièce (1), un auxiliaire de conditionnement (3) est tout d'abord appliqué sur la première pièce, et lors de l'appui de la première sphère (5) contre la première pièce (1), la sonotrode est guidée et positionnée à l'aide de l'auxiliaire de positionnement (3).

4. Procédé conforme à l'une des revendications 1 à 3,
**caractérisé en ce que**
sur la surface de la première pièce (1) il est prévu ou réalisé un repère physique (2) en particulier une cavité en forme de cuvette dans laquelle pénètre la première sphère (5), la première sphère (5) étant positionnée précisément par rapport à la première pièce (1) par le repère.

5. Procédé conforme à l'une des revendications 1 à 4,
**caractérisé en ce que**
la première sphère (5) et/ou la seconde sphère (6),
- est(sont) une (des) sphère(s) creuse(s) en un matériau synthétique thermoplastique, ou
- est(sont) une (des) sphère(s) creuse(s) en un matériau synthétique thermoplastique, ou
- comporte (nt) un noyau de sphère qui est revêtu d'un matériau synthétique thermoplastique, le matériau du noyau de sphère étant différent du matériau synthétique thermoplastique.

6. Procédé conforme à l'une des revendications 1 à 5,
**caractérisé en ce qu'**
au moins une couche proche de la surface de la première sphère (5) et/ou de la seconde sphère (6) est renforcée par des fibres et/ou des particules.

7. Procédé conforme à l'une des revendications 1 à 6,
**caractérisé en ce que**
la sonotrode (4) comporte un évidement (4a) en forme de cuvette, en particulier un évidement en forme de calotte sphérique, la première sphère (5) ou la seconde sphère (6) pénétrant dans l'évidement en forme de cuvette (4a) lors de l'appui.

8. Procédé conforme à l'une des revendications 1 à 7,
**caractérisé en ce que**
la première sphère ou la seconde sphère (5, 6) est mise en vibrations de translation au moyen de la sonotrode (4).

9. Procédé conforme à l'une des revendications 1 à 8,
**caractérisé en ce que**
la première sphère ou la seconde sphère (5, 6) est mise en vibrations de torsion au moyen de la sonotrode (4).

10. Procédé conforme à l'une des revendications 1 à 9,
**caractérisé en ce qu'**
à l'endroit au niveau duquel la première sphère (5) est appuyée contre la première pièce (1), cette première pièce (1) est essentiellement ou exactement plane de sorte que, avant la soudure il y ait un contact ponctuel entre la première sphère (5) et l'endroit au niveau duquel la première sphère (5) est appuyée contre la première pièce (1).

11. Procédé conforme à l'une des revendications 1 à 10,
**caractérisé en ce que**
la première sphère ou la seconde sphère (5, 6) est aspirée sur ou dans l'évidement en forme de cuvette (4a) au moyen d'un dispositif d'aspiration, et est appuyée à l'état aspiré contre la première pièce (1) ou contre la première sphère (5) au moyen de la sonotrode (4).

12. Procédé conforme à la revendication 11,
**caractérisé en ce que**
la première sphère ou la seconde sphère (5, 6) est prélevée par aspiration d'un réservoir de sphères, en particulier d'un réservoir de stockage rempli de plusieurs sphères.

13. Procédé conforme à l'une des revendications 1 à 12,
**caractérisé en ce que**
sur la première sphère et/ou sur la seconde sphère (5, 6) est enclipsé un élément d'enclipsage.

14. Procédé conforme à l'une des revendications 1 à 13,
**caractérisé en ce qu'**
une seconde pièce qui comporte un perçage traversant est appliquée sur la première pièce (1) de sorte que la première sphère et/ou la seconde sphère (5, 6) pénètre(nt) dans le perçage traversant ou au travers du perçage traversant, puis, un élément d'enclipsage est enclipsé sur la première sphère et/ou sur la seconde sphère (5, 6), les deux pièces étant maintenues ensemble par l'élément d'enclipsage.
